# EUROPÄISCHE PATENTANMELDUNG

(11) **EP 2 755 097 A2**
(43) Veröffentlichungstag der Anmeldung: **16.07.2014**
(21) Anmeldenummer: 14150642.8
(22) Anmeldetag: 09.01.2014
(51) Int. Cl.: G05B 19/418

(54) **Prozessdaten-Gateway in einem dezentralen Automatisierungssystem auf Basis der Webtechnologie**

(30) Priorität: 09.01.2013 DE 102013100139
(71) Anmelder: Smart HMI GmbH, 40547 Düsseldorf (DE)
(72) Erfinder: Gunia, Egbert, 47269 Duisburg (DE)
(74) Vertreter: MFG Patentanwälte Meyer-Wildhagen Meggle-Freund Gerhard PartG mbB

(57) **Zusammenfassung**

Die Erfindung betrifft ein Prozessdaten-Gateway (1) für die Kommunikation von Prozessdaten zwischen einem Prozessdaten-Client (2) und einem Prozessdaten-Server (3a, 3b, 3c). Das Prozessdaten-Gateway (1) weist einen WebSocket-Server (4) auf, welcher dazu eingerichtet ist, eine Anfrage zum Lesen oder Schreiben von Prozessdaten (items) gemäß eines Prozessdaten-Protokolls (pdi) von dem Prozessdaten-Client (2) entgegen zu nehmen. Das Prozessdaten-Gateway (1) weist ferner eine Prozessdaten-Logik (5) auf, welche dazu eingerichtet ist, die Anfrage zum Lesen oder Schreiben von Prozessdaten gemäß des Prozessdaten-Protokolls (pdi) zu interpretieren und in eine Anfrage gemäß eines Kommunikationsprotokolls (OPC-Classic, OPC-UA) eines Prozessdaten-Servers (3a, 3b, 3c) zu übersetzen. Das Prozessdaten-Gateway (1) weist ferner ein Interface (6a, 6b, 6c) auf, das als Schnittstelle zu einem Prozessdaten-Server (3a, 3b, 3c) dient und dazu eingerichtet ist, die übersetzte Anfrage zum Lesen oder Schreiben von Prozessdaten (items) an den Prozessdaten-Server (3a, 3b, 3c) zu senden.

## Beschreibung

### GEBIET DER ERFINDUNG

Die vorliegende Erfindung bezieht sich auf den Anwendungsbereich der Automatisierungstechnik, insbesondere auf ein Prozessdaten-Gateway in einem dezentralen Automatisierungssystem auf Basis der Webtechnologie.

### HINTERGRUND DER ERFINDUNG

In Maschinen-, Gebäude-, Analyse-, Produktions- oder Prozessumgebungen gibt es physikalische Daten zur Ein- und Ausgabe (Ist- und Solldaten). Diese repräsentieren in Echtzeit die momentan gemessenen Maschinendaten, bzw. ermöglichen die Vorgabe bestimmter Sollwerte zur Prozesssteuerung. Häufig sind diese beschriebenen Systeme und Prozessanlagen dezentral bzw. die Datenerfassung und Vorgabe erfolgt dezentral. Die Geräte, in denen die gewandelten Prozessdaten digital verarbeitet werden, werden als Automatisierungsgeräte bzw. Steuerungen (Controller) bezeichnet.

Ein Anwendungsbereich der Automatisierungstechnik ist das Bedienen und Beobachten von Prozessen, z.B. in Maschinen, Anlagen, Gebäuden, Warten, Messstationen, elektr. Windrädern usw. Auch die Diagnose und Hilfe bei der Suche von Störungen, sowie die dezentrale Erfassung und Speicherung der Prozessdaten sind ein wichtiges Einsatzfeld. Diese beschriebenen Funktionen werden üblicherweise über die Begriffe HMI (Human Machine Interface) bzw. SCADA (Supervisory Control and Data Aquisition) zusammengefasst.

Eine zentrale Herausforderung bei der Konzeption und Realisierung solcher HMI/ SCADA-Systeme ist die Datenschnittstelle zwischen den verschiedenartigen Automatisierungsgeräten bzw. Steuerungen zum zentralen HMI/SCADA-Gerät. Erschwerend kommt hinzu, dass durch die spezialisierten Prozesse und Steuerungsaufgaben Geräte unterschiedlicher Hersteller in einem System zusammenarbeiten müssen. Auch werden die HMI/SCADA-Systeme von spezialisierten Firmen entwickelt, während die Automatisierungsgeräte und Steuerungen von anderen Herstellern stammen.

Zum Zwecke des einheitlichen Datenaustauschs in solchen heterogenen Systemen wurde Ende der 90er Jahre eine Datenschnittstelle zwischen Steuerungs- und Bedienebene definiert und Hersteller-übergreifend standardisiert. Diese Schnittstelle wird mit OPC (Ole for Process Control) bezeichnet und basiert auf den Microsoft OLE (Object Linking Embedded) bzw. COM/DCOM Softwareschnittstellen. Als Transportlayer kommt die weit verbreitete Ethernet-Schnittstelle zum Einsatz. Die Standardisierung und Weiterentwicklung obliegt der OPC-Nutzerorganisation "OPC Foundation" (www.opcfoundation.org), in der Hersteller wie auch Endbenutzer gleichermaßen vertreten sind.

OPC basiert auf einer Server/Client-Architektur und ist durch die Verwendung von Microsoft-OLE bzw. COM/DCOM ausschließlich auf PCs mit Windows-Betriebssystemen lauffähig.

Für die verschiedenen Anforderungen im Automatisierungssystem wurden die OPC-Schnittstellen in verschiedenen Ausprägungen realisiert, nämlich OPC-DA für den Datenaustausch, OPC-AE für Alarme und Events und OPC-HA für Historical Data.

Um die Beschränkung auf Microsoft Betriebssysteme aufzuheben, wie auch zur Verbesserung weiterer Eigenschaften, wurde 2006 der Nachfolger der bestehenden OPC-Schnittstelle, die sog. OPC-UA (Unified Architecture) -Schnittstelle standardisiert. Im Sprachgebrauch verwendet man heute die Bezeichnung "OPC-Classic" für die ursprüngliche Definition und "OPC-UA" für den neuen Standard.

Die Standardisierung der Datenschnittstelle durch OPC war ein großer Erfolg und wird weltweit akzeptiert und von allen führenden Herstellern implementiert und eingesetzt. In der Praxis existieren heute OPC-Classic und OPC-UA nebeneinander, wobei für Neuentwicklungen und neue Geräte der OPC-UA Standard bevorzugt ist.

Die Spezifikation der OPC-Schnittstelle ist in dem Fachbuch "OLE for Process Control", Frank Iwanitz, Jürgen Lange, Hütig Verlag und dem Fachbuch "OPC: Von Data Access bis Unified Architecture", Jürgen Lange, Frank Iwanitz, Vde-Verlag (24. Februar 2010) ausführlich beschrieben und allgemein verfügbar.

Wie bereits eingangs beschrieben, sind reale Prozesssysteme häufig dezentral. Die Verbindung zur Datenkommunikation stellt eine Netzwerk-Infrastruktur auf Basis von Ethernet mit dem Internet-Protokoll TCP/IP zur Verfügung.

Um diese Anforderung zu unterstützen, wie auch um die Bedienung und Diagnose zu verbessern, taucht häufig der Wunsch auf, diesen Datenaustausch auf Basis der verbreiteten und ausgereiften Web-Technologie zu realisieren. Die Bedien- und Beobachtungsfunktion erfolgt in diesem Falle durch einen Web-Browser, auf dem die Darstellungs- und Eingabefunktion realisiert ist. Die Vorteile und Wirkungsweise für einen solchen Einsatz der Web-Technologie in der Prozess- und Automatisierungstechnik sind vielfach beschreiben, z.B. auch in der Patentschrift DE 102 29 923 A1, die eine verteilte Anordnung zum Betreiben von Automatisierungsgeräten beschreibt.

Ferner bietet eine Web-basierte HMI/SCADA-Lösung den großen Vorteil, die heute aufkommenden mobilen Devices wie Smartphones und Tablet-Computer zur Visualisierung einzusetzen. Dadurch ergeben sich große Vorteile für die Betreiber solcher Systeme, z.B. die Möglichkeiten zur Fernwartung, mobile Störmeldungen, Flexibilität bei der Maschineneinrichtung und vieles mehr.

Die existierenden Verfahren basieren einerseits auf der standardisierten Web-Technologie und nutzen deren Vorteile, benötigen jedoch als Schnittstelle zum Prozess eine proprietäre Erweiterung. Hierbei sind grundsätzlich zwei Realisierungsmethoden bekannt, nämlich die Client-seitige Realisierung und die Server-seitige Realisierung.

Die Realisierung auf Client-Seite erfolgt durch eine Erweiterung des Browsers. Für diese Erweiterungen, sog. Plug-Ins, existieren zahlreiche Realisierungsbeispiele (z.B. DE 102 29 923 A1) und auch real existierende Anwendungen. Diese sind häufig in Form von Java-Applets implementiert. Größter Nachteil dieser Verfahren ist die Kompatibilität. Nicht auf allen Computerbrowsern werden diese Applets gleichermaßen unterstützt. Ferner ergeben sich Nachteile in der Systemsicherheit. Häufig akzeptieren die Browser aus Sicherheitsgründen keine Plug-Ins. In der Regel ist die Performance solcher Systeme eingeschränkt, da die Plug-Ins der Browser in einer Sicherheitsumgebung, einer sog. "Sandbox" laufen, um das Eindringen von Schadsoftware in das System über das Internet zu vermeiden.

Neuerdings verzichten einige Hersteller von Browsern generell auf die Möglichkeit der Plug-Ins (z.B. Apple Safari im iOS), um die Sicherheit ihrer Systeme zu erhöhen. Dies schränkt ebenfalls die Möglichkeiten der Client-seitigen Realisierung stark ein.

Eine serverseitige Realisierungsmöglichkeit der Prozessdatenanbindung ist auf der

Website der Firma Certec, Österreich, "Atvise, HMI- and SCADA Revolution", www.atvise.com beschrieben. In dem Produkt der Firma Certec ist die Prozessdatenanbindung serverseitig realisiert, wobei hier ein Spezialserver entwickelt wurde, der gleichzeitig die Web-Inhalte und Prozessdaten intern miteinander verknüpft. Der Server reagiert auf die http-Anforderungen des Clients und verknüpft die Inhalte (sog. HTML-Seiten) online mit den Prozessdaten. Der Nachtteil der beschriebenen Lösung liegt in der Einschränkung auf Serverseite, wie auch in der Performance dieses Systems. Es können zwar standardisierte Browser auf Clientseite verwendet werden, also auch die mobilen Devices und Smartphones, jedoch muss die proprietäre Serverimplementierung der Fa. Certec verwendet werden, die Einschränkungen mit sich bringt. Das Sicherheitsverhalten dieses Spezialservers durch serverseitiges Scripting ist noch nicht untersucht.

Aufgabe der vorliegenden Erfindung ist es, eine serverseitige Realisierung der HMI/SCADA-Funktionalität auf Basis der Web-Technologie bereitzustellen, welche die Nachteile des oben beschriebenen Certec-Systems vermeidet.

### ZUSAMMENFASSUNG DER ERFINDUNG

Die vorliegende Erfindung stellt ein Prozessdaten-Gateway für die Kommunikation von Prozessdaten zwischen einem Prozessdaten-Client und einem Prozessdaten-Server bereit, wie er in den beigefügten Ansprüchen definiert ist.

Ferner stellt die vorliegende Erfindung ein Automatisierungssystem bereit, in dem der genannte Prozessdaten-Gateway die Kommunikation von Prozessdaten zwischen einem Prozessdaten-Client und einem Prozessdaten-Server unterstützt. Das Automatisierungssystem umfasst einen oder mehrere Prozessdaten-Clients, die jeweils einen WebSocket-Client implementieren, und einen oder mehrere Prozessdaten-Server.

Weitere Aspekte und Merkmale der vorliegenden Erfindung ergeben sich aus den abhängigen Ansprüchen, den beigefügten Zeichnungen und der nachfolgenden Beschreibung bevorzugter Ausführungsbeispiele.

### KURZBESCHREIBUNG DER ZEICHNUNGEN

Ausführungsbeispiele der Erfindung werden nun beispielhaft und unter Bezugnahme auf die beigefügten Zeichnungen beschreiben, in denen:
Fig. 1 eine Automatisierungspyramide zeigt, welche die unterschiedlichen Ebenen der Datenverarbeitung und die Zuordnung der Geräte und Komponenten eines Automatisierungssystems schematisch einordnet;
Fig. 2 die Server-Client-Architektur einer aus dem Stand der Technik bekannten OPC-Prozessdatenschnittstelle zeigt;
Fig. 3 ein Ausführungsbeispiel eines erfindungsgemäßen Prozessdaten-Gateways mit Schnittstellen zur Bedienebene und zur Steuerungsebene zeigt;
Fig. 4 ein detaillierteres Ausführungsbeispiel des erfindungsgemäßen Prozessdaten-Gateways aus Fig. 3 zeigt;
Fig. 5 einen Data-Frame-Header eines WebSocket-Datenpakets gemäß Version 13 bzw. 17 der WebSocket-Spezifikation rfc6455 zeigt;
Fig. 6 ein Beispiel für einen möglichen Protokollablauf zeigt, bei dem ein Webclient Messdatenwerten abonniert; und
Fig. 7 die Topologie eines beispielhaften Automatisierungssystems mit einem erfindungsgemäßen Prozessdaten-Gateway zeigt.

### BESCHREIBUNG DER BEVORZUGTEN AUSFÜHRUNGSBEISPIELE

Die im Folgenden beschriebenen Ausführungsbeispiele zeigen ein Prozessdaten-Gateway für die Kommunikation von Prozessdaten zwischen einem Prozessdaten-Client und einem Prozessdaten-Server. Ein solches Prozessdaten-Gateway zur Vermittlung von Prozessdaten kann auch als Proxy-Server bezeichnet werden. Das Prozessdaten-Gateway macht Prozessdaten eines Prozessdaten-Servers beispielsweise auf Basis der bekannten OPC-Schnittstellen OPC-Classic oder OPC-UA in der Web-Ebene verfügbar. Gleichzeitig oder alternativ können die Prozessdaten auch über ein beliebiges, proprietäres Interface einer speziellen Steuerung oder eines Automatisierungsgeräts übertragen werden. Die Standard-Web-Technologie sowohl Server- wie auch Client- seitig kann dabei unverändert bleiben.

Das erfindungsgemäße Prozessdaten-Gateway umfasst einen WebSocket-Server, welcher dazu eingerichtet ist, eine Anfrage zum Lesen oder Schreiben von Prozessdaten gemäß eines Prozessdaten-Protokolls von dem Prozessdaten-Client entgegen zu nehmen. Das Prozessdaten-Gateway umfasst ferner eine Prozessdaten-Logik, welche dazu eingerichtet ist, die Anfrage zum Lesen oder Schreiben von Prozessdaten gemäß des Prozessdaten-Protokolls zu interpretieren und in eine Anfrage gemäß eines Kommunikationsprotokolls eines Prozessdaten-Servers zu übersetzen. Weiter umfasst das Prozessdaten-Gateway ein Interface, das als Schnittstelle zu einem Prozessdaten-Server dient und dazu eingerichtet ist, die übersetzte Anfrage zum Lesen oder Schreiben von Prozessdaten an den Prozessdaten-Server zu senden. Solch ein Interface muss nicht notwendiger Weise physikalisch im Prozessdaten-Gateway lokalisiert sein. In den Ausführungsbeispielen ist beispielsweise ein Fall beschrieben, in dem sich das Interface zu einer proprietären Elektronik in der proprietären Elektronik selbst befindet.

In einem beispielhaften Anwendungsszenario nimmt der Prozessdaten-Server die übersetze Anfrage zum Lesen oder Schreiben von Prozessdaten vom Prozessdaten-Gateway auf bekannte Weise entgegen und führt die mittels der Anfrage instruierten Automatisierungsprozesse, beispielsweise das Lesen oder Schreiben von Prozesswerten aus. Der Prozessdaten-Server kann gelesene Prozessdaten mittels des Prozessdaten-Gateway an den Prozessdaten-Client zurück senden. Dazu übersetzt das Prozessdaten-Gateway die vom Prozessdaten-Server erhaltenen Prozessdaten in eine Antwort gemäß des Prozessdaten-Protokolls und sendet die Antwort gemäß des Prozessdaten-Protokolls an den Prozessdaten-Client zurück. In diesem beispielhaften Anwendungsszenario ermöglicht der erfindungsgemäße Prozessdaten-Gateway eine bidirektionale Kommunikation von Prozessdaten zwischen dem Prozessdaten-Client und dem Prozessdaten-Server.

Der Websocket-Server das Prozessdaten-Gateways kann ferner dazu eingerichtet sein, zum Zwecke des Aufbaus einer Kommunikationsverbindung (WebSocket-Handshake) mit dem Prozessdaten-Client eine HTTP-Anfrage von dem Prozessdaten-Client entgegenzunehmen und zu beantworten. Die HTTP-Anfrage kann dabei Adress-Angaben umfassen, beispielsweise eine Angabe zu TCP/IP-Host und TCP/IP-Port des Prozessdaten-Gateways. In der HTTP-Anfrage kann optional auch eine Ressource des Prozessdaten-Gateways spezifiziert werden. Die HTTP-Anfrage enthält einen Upgrade-Befehl, der ein Upgrade auf ein WebSocket-Protokoll bewirkt. Mittels einer Protokoll-Angabe (Sec-WebSocket-Protocol) kann ein bestimmtes Prozessdaten-Protokoll (pdi) als das für Anfragen zum Lesen oder Schreiben von Prozessdaten zu verwendende Protokoll spezifiziert werden.

In den Ausführungsbeispielen des erfindungsgemäßen Prozessdaten-Gateways wird die Eigenschaft genutzt, dass moderne Computerbrowser (sog. HTML5-kompatible Browser) die Möglichkeit implementieren, die http- bzw. https Anfragen mit einem sogenannten Protocol-Upgrade-Request zu generieren. Ein Server, hier insbesondere das Prozessdaten-Gateway, der diese Möglichkeit des Protocol-Upgrades unterstützt, kann sich über ein definiertes Handshake-Protokoll authentifizieren und als Partner für eine Datenverbindung zu erkennen geben. Das Handshake Protokoll kann die für den Internet-Betrieb notwendigen Sicherheitsverfahren bei der Authentifizierung implementieren und ermöglicht nach erfolgreicher Anmeldung den Datenaustausch zwischen Server- (hier Prozessdaten-Gateway) und Client auf Basis einer sogenannten Socket-Verbindung. Dieses Upgrade-Protokoll wird auch als WebSocket-Protokoll (ws) bezeichnet und ist in der Spezifikation rfc6455 der WebSocket-Implementierung durch das IETF (Internet Engineering Task Force) beschrieben und veröffentlicht (http://tools.ietf.org/html/rfc6455). Gemäß dieser WebSocket-Implementierung wird auch eine Übertragung der Prozessdaten in verschlüsselter Form beschrieben. Man spricht in diesem Fall vom wss-Protokoll (analog zur verschlüsselten Übertragung durch das https-Protokoll).

Durch das Protokoll-Upgrade kann das Prozessdaten-Gateway die Anfrage zum Lesen oder Schreiben von Prozessdaten gemäß eines Prozessdaten-Protokolls als Nutzdaten (Payload) eines WebSocket-Datenpakets entgegen nehmen, das nach der WebSocket-Spezifikation rfc6455 gebildet ist.

In einer beispielhaften Implementierung umfassen die Prozessdaten einen oder mehrere Prozesswerte (Items) und das Prozessdaten-Protokoll umfasst verschiedene Parameter bzw. Befehle. Das Prozessdaten-Protokoll kann beispielsweise einen Namen (itemName) definieren, der zur Adressierung eines Prozesswertes innerhalb eines Prozessdaten-Servers dient. Ein Schlüsselwort (itemServer) könnte zur Adressierung eines Prozessdaten-Servers dienen, auf den sich ein Prozesswert bezieht. Ein Aliasnamen (itemAlias) eines Prozesswertes könnte eine zusätzliche gemeinsame Bezeichnung des Prozesswertes darstellen. Ein laufender Index (itemIndex) kann zur schnellen Adressierung eines Prozesswertes dienen. Ein kanonischer Datentyp (itemDataType) kann den Datentyp des Prozesswertes angeben. Ein Datenfeld (itemData) enthält gelesene oder zu schreibende Daten des Prozesswertes. Eine Statusangabe (itemStatus) kann Angaben zum Status des Prozesswertes liefern. Diese Parameter bzw. Befehle sind lediglich beispielhaft genannt. Dem Fachmann steht eine beliebige Auswahl, Varianten und Modifikationen solcher Protokollparameter bzw. Befehle offen.

Die Prozessdaten-Logik das Prozessdaten-Gateways ist dazu eingerichtet, gemäß eines solchen vorgegeben Prozessdaten-Protokolls derartige Parameter bzw. Befehle einer Anfrage zum Lesen oder Schreiben von Prozessdaten zu interpretieren.

In einem vorteilhaften Ausführungsbeispiel ist die Prozessdaten-Logik ferner dazu eingerichtet, einen Subskriptionsbefehl (View) zu interpretieren, der bewirkt, dass das Prozessdaten-Gateway in regelmäßigen Abständen Prozessdaten von dem Prozessdaten-Server liest und an den Prozessdaten-Client sendet. Dazu kann eine Updaterate (Refreshrate) angeben werden, die festlegt, in welchen Abständen das Prozessdaten-Gateway Prozessdaten von dem Prozessdaten-Server lesen und an den Prozessdaten-Client senden soll. Auf diese Weise kann der Prozessdaten-Client einen Prozesswert sozusagen "abonnieren", d.h. es werden ihm regelmäßig Prozessdaten bzgl. des abonnierten Prozesswertes übersandt. Statt eine regelmäßige Updaterate vorzugeben, könnte der Prozessdaten-Client alternativ auch in unregelmäßigen Abständen, z.B. nur beim Vorliegen einer Veränderung des Prozesswertes oder dessen Status mit neuen Prozessdaten versorgt werden.

Die Prozessdaten-Logik des Prozessdaten-Gateways ist dazu eingerichtet, die Anfrage zum Lesen oder Schreiben von Prozessdaten gemäß des Prozessdaten-Protokolls wie gerade beschrieben zu interpretieren und in eine Anfrage gemäß eines Kommunikationsprotokolls eines Prozessdaten-Servers zu übersetzen. Die übersetzte Anfrage zum Lesen oder Schreiben von Prozessdaten wird über ein Interface , das als Schnittstelle zu einem Prozessdaten-Server dient, an einen Prozessdaten-Server gesendet. Das Interface zum Prozessdaten-Server kann beispielsweise ein OPC-Classic-Client, ein OPC-UA-Client, oder ein Client eines proprietären Steuerungs-Servers sein.

Im Falle eines Prozessdatenservers des Typs OPC-Classic oder OPC-UA erfolgt die Übersetzung der Anfrage zum Lesen oder Schreiben von Prozessdaten aus dem oben beschriebenen Prozessdaten-Protokoll in das jeweilige, dem Fachmann bekannte und in der eingangs erwähnten Literatur beschriebene OPC-Protokoll. Im Falle eines proprietären Prozessdatenservers, beispielsweise einer proprietären Elektronik, kann der Fachmann anhand einer Beschreibung des zugehörigen Client-Protokolls eine Logik für die Übersetzung vom Prozessdaten-Protokoll in das Protokoll der proprietären Elektronik einrichten.

In einem Ausführungsbeispiel mit dem beschriebenen WebSocket-Handshake und dem beispielhaften Prozessdaten-Protokoll ist das Prozessdaten-Gateway in der Lage, auf Anfrage (Request) eines Clients eine WebSocket-Verbindung zu etablieren. Über diese Verbindung kann der Client die Prozessdaten adressieren und zum Lesen oder Schreiben anfordern. Das Gateway interpretiert diese Anfrage und öffnet gemäß der Adressierung eine oder mehrere Instanzen zu den OPC-Classic oder UA-Servern, bzw. initialisiert die implementierte Hardwareschnittstelle zu einer proprietären Elektronik (Embedded Elektronik). Dann kann der Datenaustauch zwischen Prozess und Web-Ebene durch das beschriebene Gateway erfolgen.

Die folgenden Ausführungsbeispiele zeigen auch ein beispielhaftes Automatisierungssystem mit einem oder mehreren Prozessdaten-Clients, die, wie oben beschrieben, als WebSocket-Clients implementiert sind. Das beispielhafte Automatisierungssystem umfasst ferner einen oder mehrere Prozessdaten-Server, wie oben beschrieben. Ein Prozessdaten-Gateway im Automatisierungssystem unterstützt die Kommunikation von Prozessdaten zwischen den Prozessdaten-Clients und den Prozessdaten-Servern. Der Prozessdaten-Client kann ein WebSocket-fähiger Browser sein, beispielsweise ein HTML5-Browser, der als Bedienebene des Automatisierungssystems dient. Der Prozessdaten-Server kann beispielsweise ein OPC-Classic-Server, ein OPC-UA-Server, oder ein proprietärer Steuerungs-Server sein.

Ein beispielhaftes Automatisierungssystem umfasst einen Prozessdaten-Gateway mit einem WebSocket-Server, der dazu eingerichtet ist, eine Anfrage zum Lesen oder Schreiben von Prozessdaten (items) entgegen zu nehmen. Der Prozessdaten-Gateway nimmt beispielsweise, wie oben beschrieben, eine Anfrage zum Lesen oder Schreiben von Prozessdaten (items) gemäß eines Prozessdaten-Protokolls (pdi) entegegen.

In einem Ausführungsform umfasst das Automatisierungssystem ferner einen Webserver, der dazu eingerichtet ist, eine Webseite bereitzustellen, welche vom Prozessdaten-Gateway bereitgestellte Prozessdaten referenziert. Eine vom Webserver bereitgestellte Webseite kann beispielsweise eine HTML-Seite sein. Die Referenzierung von Prozessdaten erfolgt beispielsweise durch Angabe eines Schlüsselwortes (itemServer) der zur Adressierung eines Prozessdaten-Servers dient, auf den sich ein Prozesswert bezieht. Ein Aliasnamen (itemAlias) eines Prozesswertes kann eine zusätzliche gemeinsame Bezeichnung des Prozesswertes darstellen, die zur Adressierung verwendet werden kann. Alternativ kann auch ein laufender Index (itemIndex) zur schnellen Adressierung eines Prozesswertes dienen. In der vom Webserver bereitgestellten Webseite kann auch die Adresse des Prozessdaten-Gateways (beispielsweise als URL ws://pdg:8000/processdata) angegeben sein, über den ein Prozessdaten-Client das Prozessdaten-Gateway ansprechen kann, um Prozessdaten lesen oder schreiben zu können.

Das Prozessdaten-Gateway dient in dem Ausführungsbeispiel lediglich zur Kommunikation von Prozessdaten zwischen einem Prozessdaten-Client und einem Prozessdaten-Server. Der Prozessdaten-Gateway stellt selbst keine Webseiten zur Anzeige von Prozessdaten bereit. Solche Webseiten zur Anzeige von Prozessdaten werden stattdessen von einem Webserver des Automatisierungssystems bereitgestellt.

Das Prozessdaten-Gateway und der Webserver werden vorteilhaft als physikalisch separierte Einheiten des Automatisierungssystems ausgebildet. Beispielsweise können das Prozessdaten-Gateway und der Webserver als eigenständige Hardwaresysteme realisiert werden, die räumlich voneinander getrennt sind und jeweils mit einem lokalen Netzwerkwerk, beispielsweise mittels einer Ethernet-Verbindung, verbunden sind. Es können in einem erfindungsgemäßen Automatisierungssystem auch mehrere Prozessdaten-Gateways vorgesehen werden. So kann beispielsweise jedes Prozessdaten-Gateway für eine eigene Gruppe von Prozessdaten-Servern zuständig sein.

In dem beispielhaften Automatisierungssystem ist das Prozessdaten-Gateway dazu eingerichtet, eine WebSocket-Verbindung zum Lesen oder Schreiben von Prozessdaten über einen ersten Datenkommunikations-Port bereitzustellen. Es kann sich bei diesem Datenkommunikations-Port beispielsweise um TCP/IP-Port 8000 des Prozessdaten-Gateways handeln. Der Webserver des Automatisierungssystems ist ferner dazu eingerichtet, eine Webseite, welche Prozessdaten des Prozessdaten-Gateways referenziert, über einen zweiten Datenkommunikations-Port bereitzustellen. Der zweiten Datenkommunikations-Port ist von dem ersten Datenkommunikations-Port zur Übertragung von Prozessdaten verschieden. Für die Bereitstellung der Webseite kann beispielsweise der hierfür übliche TCP-Port 80 eines Webservers verwendet werden. Prozessdaten und Webseite, welche die Prozessdaten referenziert, stammen in diesem Ausführungsbeispiel von unterschiedlichen physikalischen Einheiten des Automatisierungssystems, nämlich Webserver und Prozessdaten-Gateway, und die Übertragung von Prozessdaten und Webseite zum Prozessdaten-Client erfolgt auf unterschiedlichen logischen Datenkommunikationskanälen. Dadurch können in einem Automatisierungssystem beispielsweise mehrere Prozessdaten-Gateways betrieben werden, die jeweils die Kommunikation mit einer zugehörigen Gruppe von Prozessdaten-Servern unterstützen. Diese Trennung von Prozessdaten und Webseiten zur Anzeige der Prozessdaten hat zusätzlich zu den bereits oben genannten Vorteilen der Verwendung eines erfindungsgemäßen Prozessdaten-Gateways auch den Vorteil, dass die Bereitstellung von Webseiten zur Anzeige und Änderung von Prozessdaten mehrerer Prozessdaten-Gateways durch einen einzigen zentralisierten Webserver des Automatisierungssystems erfolgen kann.

In dem beispielhaften Automatisierungssystem können ein oder mehrere Prozessdaten-Clients vorgesehen werden, die jeweils einen Websocket-Client umfassen. Ein Prozessdaten-Client ist in diesem beispielhaften Automatisierungssystem dazu eingerichtet, mit dem Webserver zu kommunizieren, um eine von dem Webserver bereitgestellte Webseite zu empfangen. Die vom Webserver bereitgestellte Webseite referenziert, wie oben beschrieben, vom Prozessdaten-Gateway bereitgestellte Prozessdaten. Der Prozessdaten-Client ist in diesem beispielhaften Automatisierungssystem dazu eingerichtet, mittels des Websocket-Clients mit dem Prozessdaten-Gateway zu kommunizieren, um auf der Webseite referenzierte Prozessdaten vom Prozessdaten-Gateway zu lesen oder zu schreiben. Der Prozessdaten-Client baut beispielsweise eine Websocket-Verbindung zu dem in der Webseite angegeben Prozessdaten-Gateway auf (beispielsweise mittels einer URL wie ws://pdg:8000/processdata), um die in der Webseite adressierten Prozessdaten vom Prozessdaten-Gateway zu lesen oder zu schreiben. Das Prozessdaten-Gateway umfasst eine Prozessdaten-Logik, welche dazu eingerichtet ist, die Anfrage zum Lesen oder Schreiben von Prozessdaten gemäß des Prozessdaten-Protokolls zu interpretieren und in eine Anfrage gemäß eines Kommunikationsprotokolls eines Prozessdaten-Servers zu übersetzen. Der Prozessdaten-Client bettet gelesene Prozessdaten in dafür vorgesehene Felder der Webseite ein und bringt diese so zu Anzeige. Vom Prozessdaten-Gateway empfangene Nachrichten mit Prozessdaten können beispielsweise im Prozessdaten-Client Events auslösen, mit denen die Prozessdaten (per Javascript-Programm, das in eine Webseite eingebettet ist) an die dafür vorgesehenen Felder der Webseite geschrieben werden. Der Prozessdaten-Client kann beispielsweise automatisch ein Render-Event auslösen und die neuen Prozessdaten auf einem Bildschirm darstellen. Werden mittels des Prozessdaten-Clients in einer Webseite eingebettete Prozessdaten geändert, so sendet der Prozessdaten-Client eine entsprechende Anfrage zu Schreiben von Prozessdaten an das Prozessdaten-Gateway. Auch ein Schreiben von Prozessdaten kann beispielsweise per Javascript-Programm erfolgen, das in eine Webseite eingebettet ist.

Das beschriebene Prozessdaten-Gateway kann als Hardware-Komponente oder als Computerprogrammprodukt implementiert werden. Die verschiedenen Untereinheiten des Gateways wie beispielsweise WebSocket-Server, Prozessdaten-Logik und die Interfaces zu den Prozessdaten-Servern müssen nicht notwendiger Weise in einer einzigen Hardware-Komponente lokalisiert sein. Die verschiedenen Untereinheiten können auch dezentral über mehrere Hardware-Komponenten verteilt werden. Als Computerprogrammprodukt könnte das beschriebene Prozessdaten-Gateway beispielsweise auf einem handelsüblichen PC bzw. Server installiert werden. Das Computerprogrammprodukt, das auch aus mehreren Komponenten bestehen kann, implementiert einen erfindungsgemäßen Prozessdaten-Gateway bzw. ein computerimplementiertes Verfahren zum Senden und Empfangen von Prozessdaten, wie es hier im Zusammenhang mit den Ausführungsbeispielen des Prozessdaten-Gateways beschrieben ist.

Im Folgenden werden nun Ausführungsbeispiele des erfindungsgemäßen Prozessdaten-Gateways und eines entsprechenden Automatisierungssystems anhand der Figuren beschrieben.

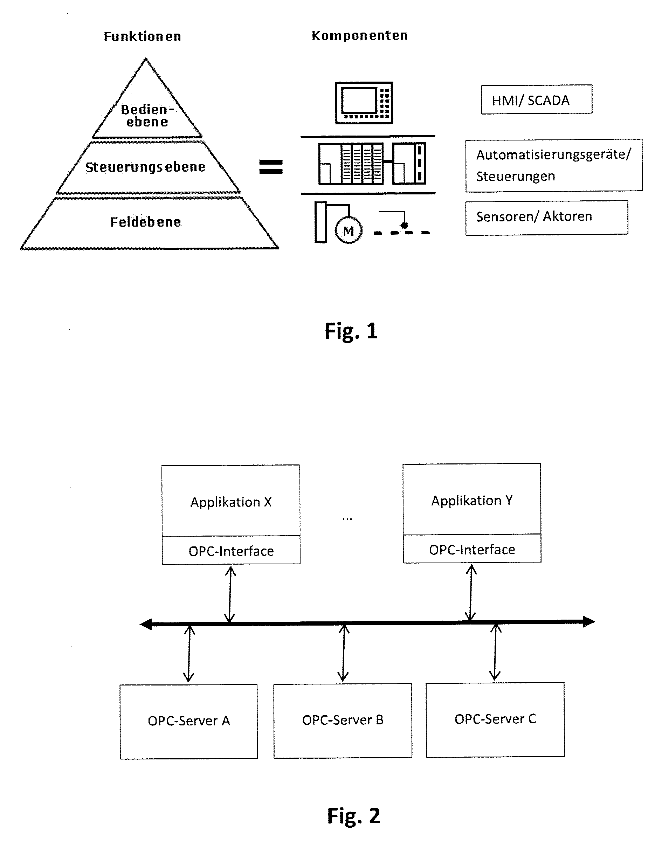

Die in Fig. 1 gezeigte Automatisierungspyramide zeigt die unterschiedlichen Ebenen der Datenverarbeitung und die Zuordnung der Geräte und Komponenten eines Automatisierungssystems, das z.B. bei Maschinen, Anlagen, Gebäuden, Warten, Messstationen, elektr. Windrädern usw. zur Anwendung kommt. Die Basis der Automatisierungspyramide wird durch verschiedenste Sensoren und Aktoren, beispielsweise Temperatursensoren und elektrische Motoren gebildet. Diese Sensoren und Aktoren werden als Feldebene bezeichnet. Automatisierungsgeräte bzw. Steuerungen lesen die von den Sensoren erfassten Messwerte aus und liefern Steuerungsgrößen für die Ansteuerung der Aktoren. Mittels Prozesslogiken können die Automatisierungsgeräte bzw, Steuerungen Messwerte erfassen, auswerten und daraus Steuerungsgrößen automatisch berechnen. Diese Automatisierungsgeräte bzw. Steuerungen sind in der Automatisierungspyramide als Steuerungsebene dargestellt, die auf der Feldebene sitzt. Die Spitze der Automatisierungsebene betrifft das Bedienen und Beobachten der Prozesse. Diese Funktionen werden üblicherweise über die Begriffe HMI (Human Machine Interface) bzw. SCADA (Supervisory Control and Data Aquisition) zusammengefasst und werden in der Automatisierungspyramide als Bedienebene bezeichnet. Auch die Diagnose und Hilfe bei der Suche von Störungen, sowie die dezentrale Erfassung und Speicherung der Prozessdaten sind ein wichtiges Einsatzfeld.

Die Ausführungsbeispiele betreffen die Datenschnittstelle zwischen verschiedenartigen Automatisierungsgeräten bzw. Steuerungen (Steuerebene in Fig. 1) zu einem oder mehreren zentralen HMI/SCADA-Geräten (Bedienebene in Fig. 1).

Fig. 2 zeigt die Server-Client-Architektur der aus dem Stand der Technik bekannten OPC-Prozessdatenschnittstelle, wie sie in dem Fachbuch "OPC-Overview Version 1.0" der OPC-Foundation beschrieben ist. Drei OPC-Server A, B und C stellen die Steuerungsebene dar. Verschiedene Applikationen X bis Y stellen die Bedienebene dar. Als Datenschnittstelle zwischen Steuerungs- und Bedienebene fungiert die OPC-Schnittstelle (Ole for Process Control). Als Transportlayer kommt die Ethernet Schnittstelle zum Einsatz. Die Applikationen X bis Y weisen ein OPC-Interface auf, das die Datenkommunikation mit dem OPC-Server ermöglicht. In einer Client-seitigen Realisierung der OPC- Prozessdatenschnittstelle ist das OPC-Interface beispielsweise als eine Erweiterung (Plug-In) des Browsers realisiert.

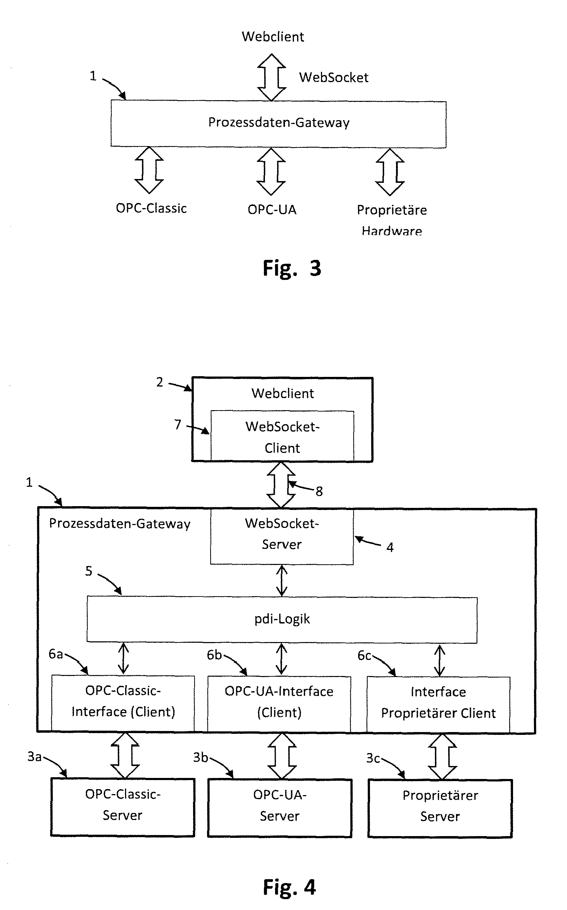

Fig. 3 zeigt schematisch ein Ausführungsbeispiel des erfindungsgemäßen Prozessdaten-Gateways 1 mit seinen Schnittstellen zur Bedienebene und zur Steuerungsebene. Der beispielhafte Prozessdaten-Gateway 1 vermittelt mittels einer OPC-Classic-Schnittstelle, einer OPC-UA-Schnittstelle und einer proprietären Schnittstelle zur Steuerungsebene und Mittels eines WebSockets 8 zur Bedienebene.

Fig. 4 zeigt ein detaillierteres Ausführungsbeispiel des erfindungsgemäßen Prozessdaten-Gateways. Das Prozessdaten-Gateway 1 unterstützt die Kommunikation von Prozessdaten zwischen einem Prozessdaten-Client, hier Webclient 2, und drei Prozessdaten-Servern 3a, 3b und 3c, hier ein OPC-Classic-Server 3a, ein OPC-UA-Server 3b und ein proprietärer Server 3c. Das Prozessdaten-Gateway 1 umfasst einen WebSocket-Server 4, welcher dazu eingerichtet ist, eine Anfrage zum Lesen oder Schreiben von Prozessdaten gemäß eines Prozessdaten-Protokolls (pdi) von dem Webclient 2 entgegen zu nehmen. Ferner umfasst das Prozessdaten-Gateway 1 eine Prozessdaten-Logik 5, welche dazu eingerichtet ist, die Anfrage zum Lesen oder Schreiben von Prozessdaten gemäß des Prozessdaten-Protokolls (pdi) zu interpretieren und in eine Anfrage gemäß eines Kommunikationsprotokolls (OPC-Classic, OPCUA) eines der Prozessdaten-Server 3a, 3b, 3c zu übersetzen. Das Prozessdaten-Gateway 1 umfasst ferner drei Interfaces 6a, 6b, 6c, die als Schnittstellen zu einem der Prozessdaten-Server 3a, 3b, 3c dienen und dazu eingerichtet sind, die übersetzte Anfrage zum Lesen oder Schreiben von Prozessdaten an den zuständigen Prozessdaten-Server 3a, 3b oder 3c zu senden. Die Interfaces 6a, 6b, 6c sind hier durch einen OPC-Classic-Client 3a, einen OPC-UA-Client 3b und einen Client 3c eines proprietären Prozessdaten-Servers realisiert. Der Webclient 2 umfasst einen WebSocket-Client 7, der mit dem WebSocket-Server 4 des Prozessdaten-Gateway 1 die WebSocket-Verbindung 8 aufbaut und das Prozessdaten-Protokolls (pdi) kapselt.

Die in Zusammenhang mit den Figuren 3 und 4 beschriebenen Ausführungsbeispiele eines Prozessdaten-Gateways 1 bzw. eines Automatisierungssystems, das auf solch einem Prozessdaten-Gateway 1 basiert verwenden WebSocket-Verbindungen, um die Webclients 2 an das Automatisierungssystem anzubinden. Das eingesetzte WebSocket-Protokoll ist ein auf TCP basierendes Netzwerkprotokoll mit der Eigenschaft, bidirektionale Verbindungen zwischen einem Client und einem Server herzustellen. Der Verbindungsaufbau erfolgt in den Ausführungsbeispielen immer clientseitig, wobei Server und Client eine Handshake-Prozedur zur Authentifizierung durchführen.

Bei reinen HTTP-Verbindungen, wie Sie im Internet üblich sind, erfordert jede Aktion des Servers eine vorhergehende Anfrage des Clients. Beim hier verwendeten WebSocket-Protokoll reicht es, wenn der WebSocket-Client 7 die Verbindung einmalig zur Initialisierung öffnet. Die dann offene Verbindung kann ab diesem Zeitpunkt aktiv von beiden Teilnehmern verwendet werden (bidirektional). Der WebSocket-Server 4 muss also nicht mehr Anfragen vom WebSocket-Client 7 abwarten, sondern kann neue Informationen ausliefern, ohne auf eine neue Verbindung des WebSocket-Clients 2 zu warten. Außerdem entfällt bei dieser Vorgehensweise der zusätzliche Protokolloverhead der http-Übertragung, es können reine Nutzdaten übertragen werden.

In den beschriebenen Ausführungsbeispielen ist das WebSocket-Protokoll auf der Clientseite 2 im Webclient (Browser) implementiert, sofern es sich um einen modernen, HTML-5 kompatiblen Browser handelt. In der Praxis unterstützen heute alle gängigen Computerbrowser in ihrer aktuellen Version diesen Standard. Dies gilt auch für die Browser in den mobilen Devices der Android bzw. iOS Geräte. Der Aufruf der WebSocket-Verbindungsdaten sowie Handshake und Datenaustausch wird in den Ausführungsbeispielen durch das WebSocket-API gekapselt, welches durch das W3C (World Wide Web Consortium) standardisiert ist (http://dev.w3.org/html5/websockets/) und über Javascript im Browser aufgerufen wird. In den Ausführungsbeispielen wird der finale Stand 17 verwendet. Der Fachmann kann in alternativen Ausführungsbeispielen berücksichtigen, dass in der Praxis Browser mit unterschiedlichen Versionsständen der WebSocket-Spezifikation existieren, die nicht zueinander kompatibel sind, da während der Entwicklungs- und Standardisierungsarbeit des W3C mehrere Zwischenstände des WebSocket-Protokolls veröffentlicht und diese von den Browser-Herstellern zu verschiedenen Zeitpunkten implementiert wurden. Je nach Anwendungsfall wird der Fachmann in alternativen Ausführungsbeispielen bei der Realisierung des Prozessdaten-Gateways 1 neben dem finalen Stand 17 (wird beispielsweise von Microsoft IE10 verwendet) demnach auch andere relevanten Protokollversionen, beispielsweise 00 (draft-ietf-hybi-thewebsocketprotocol-00) (werden von den Apple-Safari-Browsern sowie den mobilen Apple-Browsern bis iOS 5 verwendet), oder 13 (Android-Browser) berücksichtigen.

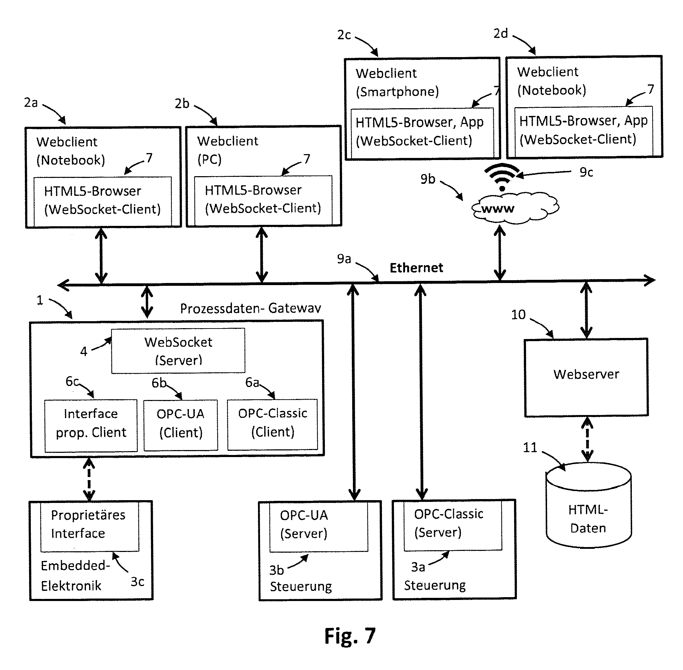

Die Adressierung der Serverseite (WebSocket-Server 4) erfolgt bei der Nutzung eines HTML5-fähigen Browsers 7, wie er in Fig. 7 gezeigt ist, über eine URL, die für WebSocket-Verbindungen 8 um die URI Schemen "ws:" für unverschlüsselte, und "wss:" für verschlüsselte Verbindungen erweitert wurden. Die URL enthält neben dem Schema noch die Adresse des Zielsystems, IP-Adresse oder Name mit Portnummer nach dem ":", sowie path Angabe zur Benennung der Resourcen (Beispiel: "ws://pdg:8000/processdata").

Die Implementierung des WebSocket-Protokolls erfolgt in den Ausführungsbeispielen serverseitig auf Basis einer Socket-Verbindung 8 für die Kommunikation im TCP/IP Netzwerk. Die Socket-Verbindung 8 kann auf Basis der Berkeley-Socket-Technik realisiert werden, die von gängigen Betriebssystemen unterstützt wird. Der WebSocket-Server 4 öffnet mittels den im Betriebssystem vorgesehenen Mitteln eine Portverbindung und wartet auf einen Request vom WebSocket-Client 7 und beantwortet diesen. Die Portnummer muss zwischen WebSocket-Client 7 und WebSocket-Server 4 vorher vereinbart sein.

Anschließend bleibt die Portverbindung geöffnet und WebSocket-Client 7 und WebSocket-Server 4 können bidirektional Daten miteinander austauschen. Dazu wird ein Unterprotokoll "pdi" als Prozessdaten-Protokoll definiert, für das weiter untern ein Beispiel beschrieben wird. Über das Prozessdaten-Protokoll pdi erfolgt die Anbindung an die Prozessdaten, so dass der WebSocket-Client 7 über das Prozessdaten-Gateway 1 die benötigten Daten adressieren kann.

Das Prozessdaten-Gateway 1 ist in der Lage, gleichzeitig mehrere Verbindungen zu übergeordneten WebSocket-Clients 7 zu behandeln (siehe beispielsweise die verschiedenen HTML5-Browser der Webclients 2a, 2b, 2c und 2d des weiter unten beschriebenen Ausführungsbeispiels der Fig. 7). Dazu besitzt das Prozessdaten-Gateway 1 intern eine Thread-Struktur, wobei für jeden WebSocket-Client 7 eine eigene Socket-Verbindung 8 etabliert wird.

Im Folgenden ist ein beispielhafter Handshake des siebzehnten Protokollentwurfs (draft-ietf-hybi-thewebsocketprotocol-17) dargestellt.
GET /processdata HTTP/1.1
Host: pdg:8000
Upgrade: websocket
Connection: Upgrade
Sec-WebSocket-Key: mFP4i799yt3eYfbh/njKyw==
Origin: http://example.com
Sec-WebSocket-Protocol: pdi
Sec-WebSocket-Version: 13

Wie auch im HTTP-Protokoll gibt der WebSocket-Client 7 an, auf welche Ressource (hier: /processdata) und auf welchen Host (hier: pdg mit nachgeschalteter Portangabe 8000) er zugreifen möchte. Außerdem fordert der WebSocket-Client 7 ein Upgrade auf das Websocket-Protokoll. Der zufällig generierte "Sec-WebSocket-Key" (base-64 kodiert) dient zur Überprüfung, ob der WebSocket-Server 4 die Anfrage tatsächlich gelesen und verstanden hat.

Unter "Sec-WebSocket-Protocol" hat der WebSocket-Client 7 die Möglichkeit, auf das Websocket-Protokoll aufbauende Protokolle anzugeben, die die Clientanwendung unterstützt. Hier wird beispielshaft mittels "pdi" auf ein eigendefiniertes Protokoll zum Austausch von Prozessdaten verwiesen, das in den Ausführungsbeispielen Prozessdaten-Protokoll bezeichnet wird und unten in beispielhafter Weise näher erläutert wird. Unter "Sec-WebSocket-Version" wird die verwendete WebSocket-Protokollversion angegeben (hier 13).

Auf die obige Beispielanfrage antwortet der WebSocket-Server 4 beispielsweise wie folgt:
HTTP/1.1 101 Switching Protocols
Upgrade: websocket
Connection: Upgrade
Sec-WebSocket-Accept: s3pPLMBiTxaQ9kYGzzhZRbK+xOo= Sec-WebSocket-Protocol: pdg

Durch den HTTP-Statuscode 101 und die folgenden zwei Zeilen erklärt der WebSocket-Server 4, dass er mit dem Wechsel des Protokolls einverstanden ist. Im Fehlerfalle wird der Statuscode 4xx (Client-Fehler) bzw. 5xx (Server-Fehler) zurückgesendet und der Verbindungsaufbau abgebrochen. Diese Prozedur ist kompatibel zum verbreiteten http-Protokoll.

Der zurückgesendete Schlüssel unter "Sec-WebSocket-Accept" dient der Verifikation, dass der WebSocket-Server 4 die Anfrage des WebSocket-Clients 7 gelesen hat. Er wird erstellt, indem an den Client-Key ("Sec-WebSocket-Key") der GUI (Globally Unique Identifier) "258EAFA5-E914-47DA-95CA-C5AB0DC85B11" angehängt und auf das Ergebnis ein SHA1-Hash des entstandenen Schlüssels erstellt und Base64-kodiert wird.

Mit dem Rückgabewert "Sec-WebSocket-Protocol" gibt der WebSocket-Server 4 an, dass er das angeforderte Subprotokoll zum Prozessdatenaustausch (hier: "pdi") kennt und akzeptiert.

Nach erfolgreichem Verbindungsaufbau (Handshake) zwischen Webclient 2 und dem Prozessdaten-Gateway 1 bzw. dem entsprechenden WebSocket-Client 7 und WebSocket-Server 4 initialisiert das Prozessdaten-Gateway 1 die Schnittstellen 6a, 6b, 6c zu den unterlagerten Prozessdaten-Servern 3a, 3b, 3c. Danach ist die Verbindung dauerhaft zum Datenaustausch geöffnet, bis sie von Client- oder Serverseite geschlossen wird.

Die Prozessdaten werden als Nutzdaten übertragen, die von kurzen Protokollheadern eingeleitet werden, in denen Steuercodes (Opcode), Verschlüsselungscode (Maskingkey) wie auch die Nutzdatenlänge angegeben sind. In dem Ausführungsbeispiel legt das Protokoll fest, dass die Daten vom WebSocket-Client 7 stets verschlüsselt gesendet werden (MASK="1"). Für die Rückantwort steht es dem WebSocket-Server 4 frei, die Daten verschlüsselt (MASK="1 ") oder unverschlüsselt (MASK="0") zu senden.

Die Maskierung, es wird ein 32 Bit Random- Code erzeugt und die Nutzdaten damit jeweils 32-Bit weise XOR verknüpft, schützen die Anwendung vor Schadsoftware durch externes Abhören der Ports. Insgesamt ist die Maskierung Teil des Sicherheitskonzeptes der WebSocket Spezifikation.

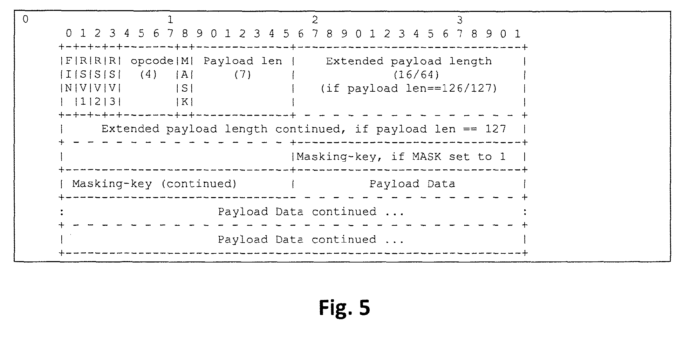

Fig. 5 zeigt beispielhaft den Data-Frame-Header eines WebSocket-Datenpakets mit Nutzdaten (Payload) gemäß Version 13 bzw. 17 der WebSocket-Spezifikation rfc6455.

Die Verbindung zwischen Client und Server bleibt solange bestehen bis entweder der WebSocket-Client 7 die Verbindung schließt (Opcode 0x8), der WebSocket-Server 4 die Verbindung schließt (Opcode 0x8), oder ein Protokoll- oder Headerfehler client- oder serverseitig auftritt.

Eine detaillierte Beschreibung der Datenübertragung gemäß dem WebSocket-Protokoll findet der Fachmann in der WebSocket-Spezifikation rfc6455.

Als Schnittstelle zur Prozessseite wird als Unterprotokoll ein Prozessdaten-Protokoll "pdi" definiert, welches dem Webclient 2 die Anfrage zum Lesen oder Schreiben bestimmter Prozessdaten (Items) wie auch einfacher Statusmeldungen ermöglicht. Die Implementierung des "pdi" als Subprotokoll kann auf vielfältige Weise realisiert werden. Die Anzahl der adressierbaren Prozessdaten-Server 3a, 3b, 3c, usw., bzw. Interfaces 6a, 6b, 6c, usw. ist vom Prinzip her nicht beschränkt. Die folgenden Parameter und Befehle zeigen beispielhaft eine Adressierung von Prozessdaten (Items) in unterschiedlichen Prozessumgebungen:

Ein Parameter "itemAlias" vom Typ String dient als Aliasname des Prozesswertes, der als eine gemeinsame Bezeichnung oder eine Beschreibung des Prozesswertes verwendet werden kann.

Ein Parameter "itemIndex" vom Typ Int, beispielsweise 0, 1, ..., dient als laufender (eindeutiger) Index zur schnellen Adressierung eines Prozesswertes.

Ein Parameter "itemServer" vom Typ String dient als Schlüsselwort zur Adressierung des angeschlossenen Prozessdaten-Servers 3a, 3b bzw. 3c, auf den sich der Prozesswert (item) bezieht. Beispielsweise kann der Wert "OPCDA" für einen spezifischen OPC-DA-Classic-Server (DA = Datenaustausch) stehen und der Wert "OPCUA" für einen spezifischen OPC-UA-Server. "xyz" kann ein implementiertes, proprietäres Interface xyz bezeichnen. Mittels des Parameters itemServer können beliebig viele Interfaces adressiert werden.

Ein Parameter "itemName" vom Typ String dient zur Adressierung des Prozesswertes innerhalb des Prozessdaten-Servers. Beispielsweise könnte mittels "Temperatur.Raum5" ein bestimmter Temperatursensor in Raum 5 adressiert werden, der von einem OPC-Server kontrolliert wird. Bei einem proprietären Interface könnten mittels "Port:88" Prozessdaten adressiert werden, die über einen spezifischen Port des proprietären Prozessdaten-Servers, hier Port 88, bereitgestellt werden.

Ein Parameter "itemDataType" vom Typ Int kann den kanonischen Datentyp des Prozesswertes (item) definieren. Beispielsweise können folgende Datentypen implementiert werden: I_1, UI_1 (char, unsigned char), I_2, UI_2(short, unsigned short), I_4, UI_4, I_8, UI_8, INT, UINT, R4 (float), R8 (double), BOOL, BSTR, DATE, CY (Curren-cy).

Ein Parameter "itemData" vom Typ String trägt die Prozessdaten, beispielsweise als vom Webclient 2 empfangener Rückgabewert im Falle des Lesens (read) von Prozessdaten, oder als vom Webclient 2 gesendeter Wert im Falle des Schreibens (write) von Prozessdaten.

Ein Parameter "itemStatus" vom Typ String trägt Properties zum Status des Prozesswertes (Items), z.B. "Good", "Bad", "Error". Diese Properties sind abhängig vom unterlagerten Prozessdaten-Server.

Ein Befehl "Write" dient zum Schreiben eines Prozesswertes. Der zu schreibende Prozesswert wird mit itemAlias oder itemIndex eindeutig adressiert.

Ein Befehl "View" dient zum Lesen von Prozesswerten und definiert eine Variablengruppe, die zur Anzeige "abonniert" wird, wie unten näher erläutert wird.

Weitere Befehle und Parameter können zu diesem beispielhaften Prozessdaten-Protokoll pdi hinzugefügt werden, sofern dies für die konkrete Anforderung oder Umgebung des Prozessdaten-Gateways 1 notwendig oder hilfreich ist. Natürlich kann der Fachmann sich auch auf eine Auswahl der oben genannten beispielhaften Parameter und Befehle beschränken und Modifikationen der genannten Parameter und Befehle vornehmen.

Eine Beispielhafte Anfrage zum Lesen des Items mit dem eindeutigen Index 132 von einem OPC-UA-Server 3b könnte gemäß diesem pdi-Protokoll wie folgt aussehen:

| | |
|---|---|
| itemIndex: | 132 |
| itemServer: | OPCUA |
| itemDataType: | I_2 |

Eine vom Webclient 2 empfangene beispielhafte Antwort auf solch eine Anfrage, mit welcher der OPC-UA-Server 3b den Messwert 1950 und weitere Informationen zum adressierten Item zurückliefert, könnte wie folgt aussehen:

| | |
|---|---|
| itemIndex: | 132 |
| itemName: | Temperatur.Raum5 |
| itemAlias: | Temperaturfühler neben Eingangstüre |
| itemServer: | OPCUA |
| itemDataType: | I_2 |
| itemData: | 1950 |
| itemStatus: | Good |

Sind serverseitig Items, die vom Client adressiert wurden, nicht vorhanden oder können nicht fehlerfrei gelesen werden, so übergibt der Prozessdaten-Server bzw. das Prozessdaten-Gateway 1 einen entsprechenden Fehlercode an den Client 2.

Aufgrund der Beschränkung des in diesen Ausführungsbeispielen verwendeten WebSocket-Protokolls (mindestens einiger Versionen davon) auf UTF-8 Textzeichen, werden die Prozessdaten vorzugsweise in Textform als Strings übertragen. Das Prozessdaten-Gateway 1 führt die Umrechnungen der Textvariablen in den entsprechenden Datentyp (itemDataType) der Prozessdaten und umgekehrt durch.

Das Prozessdaten-Gateway 1 weist eine entsprechende Prozessdaten-Logik 5 auf, welche dazu eingerichtet ist, das Prozessdaten-Protokoll pdi zu interpretieren und in entsprechende Anfragen an die jeweiligen Prozessdaten-Server 3a, 3b und 3c zu übersetzen. Die übersetzten Anfragen werden mittels entsprechender Client-Interfaces 6a, 6b, 6c an den jeweiligen Prozessdaten-Server 3a, 3b und 3c gesendet. Im Falle der häufig verwendeten OPC-Classic bzw. OPC-UA Prozessdaten-Server 3a, 3b gibt es hierzu zahlreiche veröffentlichte Beispiele, wie deren Clientschnittstelle zu initialisieren und die Prozessdaten zu adressieren bzw. auf diese zuzugreifen ist. Standardwerke hierzu wurden oben im Abschnitt Hintergrund der Erfindung genannt. Dem Fachmann stehen mit diesen Standardwerken und beispielsweise den Angeboten der Firma Softing (http://industrial.softing.com/de/) eine Reihe von Toolkits und Beschreibungen mit Beispielen zur Verfügung.

Beispielhaft sei hier der Zugriff eines OPC-Classic Interfaces 6a auf den Prozessdatenserver 3a skizziert. Dabei wird die Spezifikation OPC-DA V3.00 als aktuelle Version des Datenzugriffs auf den Server 3a angenommen. Die OPC-Classic-Schnittstelle basiert, wie bereits Eingangs erläutert, auf Microsoft DCOM (Distributed Component Object Model), eine Weiterentwicklung der Anfang der 90er Jahre eingeführten OLE Technologie. Auf die beschriebene Anwendung bezogen stellen ein oder mehrere Server, einem oder mehreren Clients Interfaces als Methodenschnittstellen zur Verfügung. Mit diesen Methoden instanziiert der Client den benötigten Server und fasst die zu adressierenden Prozessvariablen (items) in Variablengruppen (groups) zusammen. Um den Umgang mit der komplexen DCOM Schnittstelle zu vereinfachen, wird in der Regel ein Toolkit verwendet, welches die Initialisierung und Aufruf des DCOM-Interface für den OPC-Anwender kapselt und stark vereinfacht.

Der folgende Codeschnipsel in C++ zeigt die Initialisierung des OPC-Servers und die Referenzierung einer Variablengruppe mit einem einzigen Prozesswert (hier "Temperatur.Raum5") beispielhaft:

```
     // connect to OPC
          CString serverName = "Softing.OPCToolboxDemo_ServerDA.1";
          COPCServer *opcServer = host→connectDAServer(serverName);
  
      // make group
          unsigned long refreshRate=1000;
          COPCGroup *group =
      opcServer→makeGroup("Group",true,1000,refreshRate,0.0);
  
     // make item
          CString changeChanNameName = "Temperatur.Raum5";
          COPCItem *readWritableItem =
     group→addltem(changeChanNameName, true);
```

Nach der so erfolgten Initialisierung können die Daten einfach gelesen und geschrieben werden, wie das Beispiel des synchronen Read bzw. Write zeigt:

```
     // SYNCH READ of item
          OPCItemData data;
          readWritableItem→readSync(data,OPC_DS_DEVICE);
  
     // SYNCH write
          VARIANT var=OPC_PROZESSDATENWERT;
          readWritableItem→writeSync(var);
```

Das obige Codeschnipsel greift beispielhaft auf das OPC Client Toolkit der Fa. Softing zurück, lässt sich analog aber auf alle anderen verfügbaren OPC-Clients übertragen.

Im Falle des proprietären Interfaces 6c zu einer beliebigen Embedded-Hardware kann der Fachmann individuell eine interne Anbindung zwischen "pdi" und dem Dateninterface der Hardware erstellen. Dieses können direkte Hardware-Port -Zugriffe, wie auch wiederum unterlagerte Subprotokolle auf weitere Schnittstellen sein. Z.B. könnte hier eine CAN-, ProfiBus-, EtherCAT-, RS232-Schnittstelle, etc. implementiert oder angebunden werden.

Um den Protokoll-Overhead zu minimieren, und um die Prozessdaten möglichst in Echtzeit darzustellen, implementiert ein beispielhafter Prozessdaten-Gateway 1 ein sogenanntes Server-Push Verfahren. Der Webclient 2 abonniert beim Prozessdaten-Server 3a, 3b bzw. 3d ganze Variablengruppen ("Views"), die er zyklisch empfangen möchte. Ein Parameter "View" vom Typ String des Prozessdaten-Protokolls pdi definiert einen Messwert, bzw. eine Menge von Messwerten (Variablengruppe), die der Webclient 2 zur Anzeige "abonniert". Mit einem Parameter "Refreshrate" vom Typ Int kann durch den Webclient 2 eine Updaterate definiert werden, die den zeitlichen Abstand festlegt, mit der geänderte Prozesswerte gesendet bzw. "gesampelt" werden. Die Angabe kann beispielsweise in Millisekunden erfolgen. Nach Empfang des View-Kommandos liest das Prozessdaten-Gateway 1 einmalig alle Prozessdaten von den unterlagerten OPC-Servern bzw. Interfaces und überträgt diese komplett an den Webclient 2. Anschließend sendet das Prozessdaten-Gateway 1 nur noch geänderte Daten intervallmäßig mit der angeforderten Refreshrate an den Webclient 2. Das Abonnement kann mittels eines Befehls "Stop" beendet werden.

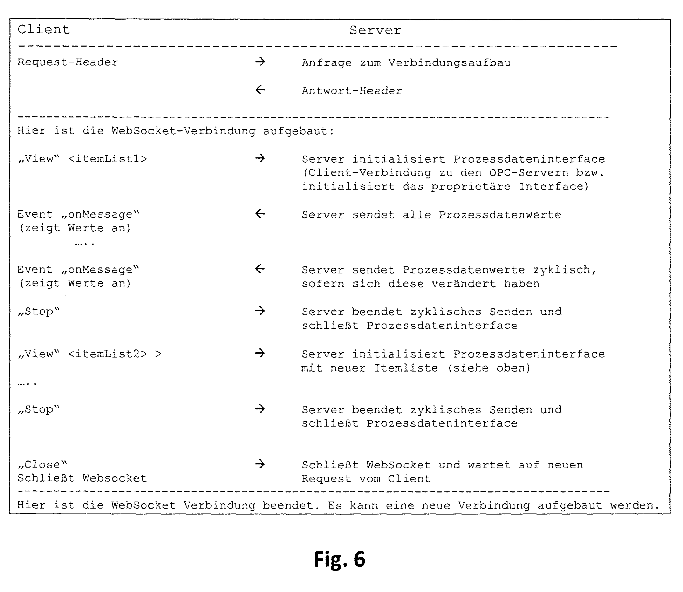

In Fig. 6 ist ein Beispiel für einen möglichen Protokollablauf gegeben. In einem ersten Schritt leitet der Webclient 2 durch Senden eines Request-Headers den Handshake zum Aufbau der Datenverbindung ein. Das Prozessdaten-Gateway 1 reagiert mit einem Antwort-Header. Nach erfolgreichem Handshake ist die WebSocket-Verbindung aufgebaut. Der Webclient 2 sendet nun den "View"-Befehl und übergibt mit diesem Befehl eine Liste der zu abonnierenden Items (<itemList1>). Das Gateway initialisiert daraufhin das Prozessdateninterface (Client Verbindung zu den OPC-Servern bzw. initialisiert das proprietäre Interface). Anschließend werden die Daten aus dem Prozessdateninterface ausgelesen und an den Webclient 2 gesendet. Im Webclient 2 wird ein Event "onMessage" getriggert worauf der Webclient die empfangenen Werte zur Anzeige bringt. Gemäß der festgelegten Refreshrate sendet das Proessdaten-Gateway 1 die Prozessdatenwerte zyklisch. Das Senden kann dabei auf jene Prozessdatenwerte beschränkt werden, die sich verändert haben. Im Webclient 2 wird bei jedem Empfang von neuen Messwerten ein Event "onMessage" getriggert, worauf der Webclient die empfangenen geänderten Prozessdatenwerte anzeigt. Der Webclient 2 stoppt das Abonnement durch Übersenden des Befehls "Stop". Das Prozessdaten-Gateway beendet daraufhin das zyklische Senden und schließt das Prozessdateninterface. Der Prozess kann durch den Webclient 2 durch Übersenden einer neuen Liste von zu abonnierenden Items (<itemList2>) erneut gestartet werden. Alternativ kann der Webclient 2 mit einem "Close"-Befehl den WebSocket schließen. Das Prozessdaten-Gateway 1 schließt daraufhin den WebSocket und wartet auf einen neuen Request vom Webclient 2.

Die empfangenen Nachrichten lösen im Browser des Webclients 2 Events aus, in denen die Prozessdaten (per Javascript Programm) an die dafür vorgesehenen Felder der HTML-Seite geschrieben werden. Der Browser löst automatisch ein Render-Event aus und stellt die neuen Daten auf dem Bildschirm dar. Im Folgenden ist beispielhaft ein Codeschnipsel des Javascript-Event zur Anzeige der Daten gezeigt:

```
      function onMessage(evt) {
           output.innerHTML=evt.data;
      }
```

Fig. 7 zeigt die Topologie eines beispielhaften Automatisierungssystems mit einem Prozessdaten-Gateway 1, wie es oben unter Bezug auf die Fig. 3 bis 6 beschrieben wurde. Das Prozessdaten-Gateway 1 unterstützt die Kommunikation von Prozessdaten zwischen den Prozessdaten-Servern OPC-Classic 3a, OPC-UA 3b und einer proprietären Embedded-Elektronik 3c/6c. Wie bereits in Fig. 4 gezeigt weist das Prozessdaten-Gateway 1 einen WebSocket-Server 4 und als Interfaces einen OPC-Classic-Client 6a,einen OPC-UA-Client 6b und einen Client 6c einer proprietären Embedded-Elektronik auf, welche Schnittstellen zu den jeweiligen Prozessdaten-Servern OPC-Classic 3a,OPC-UA 3b und der Embedded-Elektronik bilden. In Fig. 7 sind vier verschiedene Webclients 2a, 2b, 2c und 2d gezeigt, die jeweils einen HTML5-Browser aufweisen, der einen WebSocket-Client 7 implementiert. Webclient 2a ist beispielhaft auf einem Notebook in einem Firmen-Intranet lokalisiert, Webclient 2b auf einem PC im Firmen-Intranet. Die Transport-Layer 9a, 9b, 9c ist firmenintern durch ein Ethernet-Netzwerk 9a realisiert. Das Ethernet-Netzwerk 9a ist mit dem Internet (www) 9b verknüpft. Über das Internet 9b können weitere, firmenexterne Webclients 2c und 2d in das Automatisierungssystem eingebunden werden. Diese externen Webclients 2c, 2d können zur Fernwartung genutzt werden. Die Fernwartung kann beispielsweise über ein Notebook 2d oder ein Smartphone 2c erfolgen, die HTML5-fähige Internet-Browser oder WebSocket-APIs aufweisen. So kann neben dem Zugriff per HTML 5 der Zugriff auch über Applikationen bzw. Apps erfolgen, welche über eine WebSocket-API auf das WebSocket-basierte Automatisierungssystem zugreifen. Smartphone 2c und Notebook 2d können beispielsweise über eine WLAN-Funkverbindung 9c mit dem Internet 9b und damit mit dem Intranet der Firma verbunden sein, wie dies in Fig. 7 gezeigt ist.

Im Ausführungsbeispiel der Fig. 7 ist neben den Prozessdaten-Servern 3a, 3b und 3c zudem auch ein Webserver 10 gezeigt, der HTML-Seiten aus einem Speicher für HTML-Daten 11 an die Webclients ausliefern kann. Dieser optionale Webserver wird neben den Prozessdaten-Servern betrieben, um HTML-Seiten bereitzustellen. Durch entsprechende Referenzierung können beispielsweise HTML-Seiten aus dem Speicher für HTML-Daten 11 mit Prozessdaten von den Prozessdaten-Servern 3a, 3b, 3c verknüpft werden.

Die Verbindung zwischen Webserver 10 und Speicher für HTML-Daten 11 ist in Fig. 7 gestrichelt gezeichnet, da der Speicher 10 nicht unbedingt über das Ethernet-Netzwerk 9a an den Webserver 10 angeschlossen sein muss. Webserver 10 und Speicher für HTML-Daten 11 könnten auch in einer einzigen Hardware-Komponente, z.B. einem Server-Computer realisiert sein. Auch müssen die Prozessdaten-Server 3a, 3b, 3c nicht notwendiger Weise über das Ethernet-Netzwerk 9a mit dem Prozessdaten-Gateway 1 verbunden sein. So könnte beispielsweise die Embedded-Elektronik 3c auch direkt oder mit alternativen Methoden mit dem Prozessdaten-Gateway 1 verbunden sein, wie dies in Fig. 7 durch die gestrichelte Verbindung angedeutet ist.

Das in den Ausführungsbeispielen beschriebene Prozessdaten-Gateway vermeidet die Nachteile der bisherigen Implementierungen zur Weiterverarbeitung von Prozessdaten über die Web-Technologie auf Client- oder Serverseite. Das Prozessdaten-Gateway fungiert zwischen der Prozessdatenwelt, beispielhaft repräsentiert durch die OPC- oder proprietären Hardwareschnittstellen, und der in modernen Browsern implementierten WebSocket-Schnittstelle. Das Gateway funktioniert in der Art eines Proxys und bearbeitet die Upgrade-Requests der Clients und implementiert auf diese Weise einen WebSocket-Datenkanal. Dieser Datenkanal wird in den Ausführungsbeispielen zur schnellen Übertragung genutzt, wobei die Prozessdaten zyklisch synchron über ein Subprotokoll an den Browser gesendet werden. In speziellen Ausführungsformen lösen die empfangenen Daten über das Server-Push Verfahren Javascript-Events aus, in denen die Daten in die Textfelder der HTML-Seiten geschrieben werden. Mit diesem Verfahren sind Update-Raten von wenigen Millisekunden (abhängig von der jeweiligen Hardware im Client und im Server) erreichbar. Es ist auf den verfügbaren Browsern der mobilen Devices wie Smartphones oder Tablet-Computer anwendbar und bringt dadurch zahlreiche Vorteile für verteilte und mobile Anwendungen im Automatisierungs- und Prozessdaten Bereich mit sich.

## Patentansprüche

1. Automatisierungssystem, umfassend
ein Prozessdaten-Gateway (1) mit einem WebSocket-Server (4), der dazu eingerichtet ist, eine Anfrage zum Lesen oder Schreiben von Prozessdaten (items) gemäß eines Prozessdaten-Protokolls (pdi) entgegen zu nehmen, und
einen Webserver (10), der dazu eingerichtet ist, eine Webseite bereitzustellen, welche vom Prozessdaten-Gateway (1) bereitgestellte Prozessdaten referenziert.

2. Automatisierungssystem nach Anspruch 1, bei dem das Prozessdaten-Gateway (1) und der Webserver (10) als physikalisch separierte Einheiten des Automatisierungssystems ausgebildet sind.

3. Automatisierungssystem nach einem der vorstehenden Ansprüche, wobei der Prozessdaten-Gateway (1) dazu eingerichtet ist, die WebSocket-Verbindung zum Lesen oder Schreiben von Prozessdaten (items) gemäß eines Prozessdaten-Protokolls (pdi) über einen ersten Datenkommunikations-Port bereitzustellen, und der Webserver (10) dazu eingerichtet ist, die Webseite, welche Prozessdaten des Prozessdaten-Gateways (1) referenziert, über einen zweiten Datenkommunikations-Port bereitzustellen, der von dem ersten Datenkommunikations-Port verschieden ist.

4. Automatisierungssystem nach einem der vorstehenden Ansprüche, das ferner einen Prozessdaten-Client (2) mit einem Websocket-Client (7) umfasst,
wobei der Prozessdaten-Client (2) dazu eingerichtet ist, mit dem Webserver (10) zu kommunizieren, um eine von dem Webserver (10) bereitgestellte Webseite zu empfangen, welche vom Prozessdaten-Gateway (1) bereitgestellte Prozessdaten referenziert, und
wobei der Prozessdaten-Client (2) dazu eingerichtet ist, mittels des Websocket-Clients (7) mit dem Prozessdaten-Gateway (1) zu kommunizieren, um auf der Webseite referenzierte Prozessdaten vom Prozessdaten-Gateway (1) zu lesen oder zu schreiben.

5. Automatisierungssystem nach einem der vorstehenden Ansprüche, bei dem das Prozessdaten-Gateway (1) umfasst:
einen WebSocket-Server (4), welcher dazu eingerichtet ist, eine Anfrage zum Lesen oder Schreiben von Prozessdaten (items) gemäß eines Prozessdaten-Protokolls (pdi) von einem Prozessdaten-Client (2) entgegen zu nehmen,
eine Prozessdaten-Logik (5), welche dazu eingerichtet ist, die Anfrage zum Lesen oder Schreiben von Prozessdaten gemäß des Prozessdaten-Protokolls (pdi) zu interpretieren und in eine Anfrage gemäß eines Kommunikationsprotokolls eines Prozessdaten-Servers (3a, 3b, 3c) zu übersetzen, und
ein Interface (6a, 6b, 6c), das als Schnittstelle zu einem Prozessdaten-Server (3a, 3b, 3c) dient und dazu eingerichtet ist, die übersetzte Anfrage zum Lesen oder Schreiben von Prozessdaten (items) an einem Prozessdaten-Server (3a, 3b, 3c) zu senden.

6. Prozessdaten-Gateway (1) für die Kommunikation von Prozessdaten zwischen einem Prozessdaten-Client (2) und einem Prozessdaten-Server (3a, 3b, 3c), umfassend
einen WebSocket-Server (4), welcher dazu eingerichtet ist, eine Anfrage zum Lesen oder Schreiben von Prozessdaten (items) gemäß eines Prozessdaten-Protokolls (pdi) von dem Prozessdaten-Client (2) entgegen zu nehmen,
eine Prozessdaten-Logik (5), welche dazu eingerichtet ist, die Anfrage zum Lesen oder Schreiben von Prozessdaten gemäß des Prozessdaten-Protokolls (pdi) zu interpretieren und in eine Anfrage gemäß eines Kommunikationsprotokolls eines Prozessdaten-Servers (3a, 3b, 3c) zu übersetzen, und
ein Interface (6a, 6b, 6c), das als Schnittstelle zu einem Prozessdaten-Server (3a, 3b, 3c) dient und dazu eingerichtet ist, die übersetzte Anfrage zum Lesen oder Schreiben von Prozessdaten (items) an den Prozessdaten-Server (3a, 3b, 3c) zu senden.

7. Prozessdaten-Gateway (1) nach Anspruch 6, wobei der Prozessdaten-Gateway (1) lediglich zur Kommunikation von Prozessdaten dient, selbst aber keine Webseiten für die Anzeige von Prozessdaten bereitstellt.

8. Prozessdaten-Gateway (1) nach Anspruch 6 oder 7, wobei der Websocket-Server (4) ferner dazu eingerichtet ist, zum Zwecke des Aufbaus (WebSocket-Handshake) einer Kommunikationsverbindung mit dem Prozessdaten-Client (2) eine HTTP-Anfrage von dem Prozessdaten-Client (2) entgegenzunehmen, wobei die HTTP-Anfrage umfasst:
Adress-Angaben, welche einen TCP/IP-Host und TCP/IP-Port des Prozessdaten-Gateways (1) und optionaler Weise eine Ressource des Prozessdaten-Gateways (1) spezifizieren
einen Upgrade-Befehl, der ein Upgrade auf ein WebSocket-Protokoll bewirkt, und
eine Protokoll-Angabe (Sec-WebSocket-Protocol), die das Prozessdaten-Protokoll (pdi) als das für Anfragen zum Lesen oder Schreiben von Prozessdaten zu verwendende Protokoll spezifiziert.

9. Prozessdaten-Gateway (1) nach einem der Ansprüche 6-8, wobei die Anfrage zum Lesen oder Schreiben von Prozessdaten (items) gemäß eines Prozessdaten-Protokolls (pdi) als Nutzdaten (Payload) eines WebSocket-Datenpakets entgegengenommen wird, das nach der WebSocket-Spezifikation rfc6455 gebildet ist.

10. Prozessdaten-Gateway (1) nach einem der Ansprüche 6-9, bei dem die Prozessdaten-Logik (5) dazu eingerichtet ist, gemäß des Prozessdaten-Protokolls (pdi) eine oder mehrere der folgenden Parameter bzw. Befehle einer Anfrage zum Lesen oder Schreiben von Prozessdaten zu interpretieren, wobei die Prozessdaten einen oder mehrere Prozesswerte (items) umfassen:
einen Namen (itemName) zur Adressierung eines Prozesswertes (item) innerhalb eines Prozessdaten-Servers (3a, 3b, 3c),
ein Schlüsselwort (itemServer) zur Adressierung eines Prozessdaten-Servers (3a, 3b, 3c), auf den sich ein Prozesswert (item) bezieht,
einen Aliasnamen (itemAlias) eines Prozesswertes (item), der eine gemeinsame Bezeichnung des Prozesswertes darstellt,
einen laufenden Index (itemIndex) zur schnellen Adressierung eines Prozessertes (item),
einen kanonischen Datentyp (itemDataType) des Prozesswertes (item),
ein Datenfeld (itemData), das gelesene oder zu schreibende Daten des Prozesswertes (item) enthält,
eine Statusangabe (itemStatus), die Angaben zum Status des Prozesswertes (item) umfasst.

11. Prozessdaten-Gateway (1) nach Anspruch 10, bei dem die Prozessdaten-Logik (5) ferner dazu eingerichtet ist,
einen Befehl (View) zu interpretieren, der bewirkt, dass das Prozessdaten-Gateway (1) in regelmäßigen Abständen Prozessdaten von dem Prozessdaten-Server (3a, 3b, 3c) liest und an den Prozessdaten-Client (2) sendet, und
eine Updaterate (Refreshrate) zu interpretieren, welche angibt, in welchen Abständen das Prozessdaten-Gateway (1) Prozessdaten von dem Prozessdaten-Server (3a, 3b, 3c) lesen und an den Prozessdaten-Client (2) senden soll.

12. Prozessdaten-Gateway (1) nach einem der Ansprüche 6-11, wobei das Interface zum Prozessdaten-Server ein OPC-Classic-Client (6a), ein OPC-UA-Client (6b), oder ein Client (6c) eines proprietären Steuerungs-Servers ist.

13. Prozessdaten-Gateway (1) nach einem der Ansprüche 6-12 zur Verwendung in einem Automatisierungssystem nach einem der Ansprüche 1-5.

14. Prozessdaten-Client (2) mit einem Websocket-Client (7), wobei der Prozessdaten-Client (2) dazu eingerichtet ist,
mit einem Webserver (10) zu kommunizieren, um eine von dem Webserver (10) bereitgestellte Webseite zu empfangen, welche Prozessdaten referenziert, und
mittels des Websocket-Clients (7) mit einem Prozessdaten-Gateway (1) zu kommunizieren, um auf der empfangenen Webseite referenzierte Prozessdaten zu lesen oder zu schreiben.

15. Prozessdaten-Client (2) nach Anspruch 14 zur Verwendung in einem Automatisierungssystem nach einem der Ansprüche 1-5.
